# EUROPÄISCHE PATENTSCHRIFT

(11) **EP 2 867 874 B1**
(45) Veröffentlichungstag und Bekanntmachung des Hinweises auf die Patenterteilung: **23.01.2019**
(21) Anmeldenummer: 13753255.2
(22) Anmeldetag: 25.06.2013
(51) Int. Cl.: G08B 13/196, G05D 1/02, G08B 13/18, G08B 25/10, H04N 7/18, G08B 25/14, G08B 29/18, G08B 13/00, G08B 25/00

(54) **INTERAKTION ZWISCHEN EINEM MOBILEN ROBOTER UND EINER ALARMANLAGE**
INTERACTION BETWEEN A MOBILE ROBOT AND A MONITORING ALARM SYSTEM
INTERACTION ENTRE UN ROBOT MOBILE ET UN SYSTÈME DE SURVEILLANCE

(30) Priorität: 27.06.2012 DE 102012211071
(43) Veröffentlichungstag der Anmeldung: 06.05.2015
(73) Patentinhaber: Robart GmbH, 4020 Linz (AT)
(72) Erfinder: ARTÉS, Harold, A-4020 Linz (AT); SCHAHPAR, Michael, A-4020 Linz (AT); ISKRATSCH, Kai, A-4020 Linz (AT)
(74) Vertreter: Westphal, Mussgnug & Partner Patentanwälte mbB
(86) Internationale Anmeldenummer: PCT/AT2013/050125
(87) Internationale Veröffentlichungsnummer: WO 2014/000009

(56) Entgegenhaltungen:
- EP-A1- 2 423 893
- DE-A1-102008 030 083
- JP-A- H07 164 374
- US-A1- 2004 113 777

## Beschreibung

### Technisches Gebiet

Die vorliegende Erfindung betrifft ein Verfahren zum Betrieb eines mobilen (selbstfahrenden) Roboters, insbesondere zum Betrieb eines mobilen Roboters in einem von einer Alarmanlage überwachten Gebiet, sowie ein System und einen mobilen Roboter zur Anwendung des Verfahrens.

### Hintergrund

Zahlreiche selbstfahrende Roboter, beispielsweise zur Reinigung bzw. Bearbeitung von Bodenflächen, zum Transport von Gegenständen oder zur Inspektion einer Umgebung sind bekannt und käuflich erhältlich. Derartige Roboter können sowohl im privaten als auch im gewerblichen Bereich zum Einsatz kommen. Ebenso werden sowohl im privaten als auch im gewerblichen Bereich Alarmanlagen eingesetzt, die ein Eindringen unerwünschter Personen (beispielsweise in Gebäude oder Grundstücke) erkennen sollen. Wird das unerwünschte Eindringen detektiert, so werden in der Regel entsprechende Aktionen ausgelöst. Beispielsweise kann ein Alarm ausgelöst, Sicherheitskräfte alarmiert, Türen verriegelt werden, etc. Das Eindringen unerwünschter Personen wird unter anderem mittels Sensoren detektiert, die Bewegungen in einem zu schützenden Gebiet erkennen. Auch andere Sensoren sind für den selben Zweck bekannt, beispielsweise Trittsensoren, Wärmesensoren, Kameras, Lichtschranken, etc.

Typischerweise verrichten autonom arbeitende, mobile Roboter im gewerblichen Einsatz ihre Tätigkeiten außerhalb der Betriebszeiten, bzw. im privaten Bereich bei Abwesenheit der Eigentümer, um im täglichen Betrieb keine Störungen zu verursachen. Daher überschneiden sich ihre Einsatzzeiten häufig mit den Einsatzzeiten der Alarmanlagen. Folglich kommt es in derartigen Situationen zu Fehlalarmen, wenn die Alarmanlage die Bewegungen des Roboters registriert und den Roboter fälschlicherweise als Eindringling erkennt.

Es sind Systeme bekannt, bei welchen ein möglicher Fehlalarm nicht durch den Roboter ausgelöst werden kann, da die Roboter selbst als Alarmsystem dienen und Einbruchs-, Feuer-, oder Gefahrenalarme auslösen. In der EP 0 522 200 B1 wird beispielsweise ein zufällig umherfahrender Roboter beschrieben, welcher mit verschiedenen Sensoren versehen ist und damit ungewöhnliche Zustände, wie beispielsweise Feuer oder das Eindringen von Personen, detektieren kann. Wird ein solcher Zustand detektiert, so wird dies per Kabel oder Funk an eine zentrale Überwachungseinheit übermittelt. Aus der US 7,283,057 B2 ist ein Reinigungsroboter bekannt, der Rauch detektieren und einen Feueralarm auslösen kann. In diesen Fällen ist der Roboter sozusagen selbst die Alarmanlage und das eingangs beschriebene Problem tritt nicht auf.

Aus der US 2009/303042 A1 ist ein System bekannt, bei dem das fest installierte Alarmsystem und der Roboter miteinander kommunizieren. Wird durch die stationären Sensoren eine Unregelmäßigkeit detektiert, fährt der mobile Roboter zu der entsprechenden Stelle und kann dort beispielsweise Umgebungsbilder anfertigen. Der Roboter orientiert sich beim Anfahren der Stelle an der Stärke von RF-Signalen (radio frequency), einer Vielzahl drahtloser Sensorknoten sowie anhand einer Schätzung der zurückgelegten Strecke und der Ausrichtung des Roboters. Auch in diesem Fall kann der Roboter als Teil der Alarmanlage gesehen werden, der zusätzlich jene Bereiche überwacht, in denen von anderen Sensoren eine Unregelmäßigkeit detektiert wurde.

Die US 5,202,661 A beschreibt ein System, bei dem die Signale von Alarmsensoren am Roboter und die Signale von stationären Sensoren an einen Computer gesendet werden. Dieser berechnet anhand von mathematischen Modellen und dem Vergleich mit einem Referenzwert, ob der Roboter von den stationären Sensoren erfasst wurde und ob Alarm ausgelöst werden muss. Auch hier ist der Roboter ein Teil der Alarmanlage.

Ferner beschreibt Druckschrift DE 10 2008 030083 A1 ein Meldesystem zur Warnung vor nicht berechtigten Objekten in einem Sicherheitsbereich. In Druckschrift EP 2 423 893 A1 ist ein selbsttätig fahrendes Gerät mit einer Rundum-Abstandsmessung beschrieben. Die Druckschrift JP H07 164374 A zeigt einen Roboter für Rettungseinsätze mit einem Kamerasystem und einer Sensorik zur Detektion von Personen in der Umgebung des Roboters. Die Publikation US 2004/0113777 A1 betrifft ein Sicherheitssystem mit einem mobilen Roboter, der in Ergänzung zu festinstallieren Überwachungssensoren (*stationary security sensors*) eine zusätzliche Überwachung eines Gebäudes und eine Prüfung auf Fehlalarme ermöglicht.

Die der Erfindung zugrunde liegende Aufgabe besteht darin ein verbessertes Verfahren und System zum Vermeiden von durch mobile Roboter ausgelösten Fehlalarmen zur Verfügung zu stellen.

### Zusammenfassung der Erfindung

Diese genannte Aufgabe wird durch ein System zum Betrieb eines mobilen Roboters gemäß Anspruch 1, sowie ein Verfahren gemäß Anspruch 18 gelöst. Unterschiedliche Beispiele und Weiterentwicklungen der Erfindung sind Gegenstand der abhängigen Ansprüche.

Es wird ein System mit einem mobilen Roboter zum autonomen Ausführen von Tätigkeiten und eine stationär angebrachte Alarmanlage zum Überwachen eines Gebietes beschrieben. Gemäß einem Aspekt der Erfindung sind der Roboter und die Alarmanlage dazu ausgebildet, miteinander über eine Kommunikationsverbindung zu kommunizieren. Der mobile selbstfahrende Roboter ist dazu ausgebildet, anhand einer Karte der Umgebung über eine Bodenfläche durch zumindest einen Teil des Gebietes zu navigieren und seine Position in der Karte zu lokalisieren. Ein Auslösen eines Alarms durch die Alarmanlage wird verhindert, wenn sich der Roboter in das zu überwachende Gebiet hinein bewegt. Das Auslösen des Alarms durch die Alarmanlage wird wieder ermöglicht wird, wenn sich der Roboter aus dem zu überwachenden Gebiet heraus bewegt.

Es wird des Weiteren ein Verfahren zum Betreiben eines mobilen selbstfahrenden Roboters zum autonomen Ausführen von Tätigkeiten in einem von einer Alarmanlage überwachten Gebiet beschrieben. Gemäß einem weiteren Aspekt der Erfindung umfasst das Verfahren das Speichern und Verwalten wenigstens einer Karte der Umgebung, wobei das überwachte Gebiet zumindest teilweise in der Karte enthalten ist. Der Roboter navigiert über die Bodenfläche von zumindest einen Teil des Gebietes anhand der gespeicherten Karte der Umgebung, wobei eine Alarm-Auslösung durch die Alarmanlage verhindert wird, wenn sich der Roboter in das zu überwachende Gebiet hinein bewegt; und eine Alarm-Auslösung durch die Alarmanlage (wieder) ermöglicht wird, wenn sich der Roboter aus dem zu überwachenden Gebiet heraus bewegt.

Es wird auch ein mobiler Roboter zum autonomen Ausführen von Tätigkeiten beschrieben. Gemäß einem weiteren Aspekt der Erfindung weist der Roboter folgendes auf: ein Antriebsmodul zur Bewegung des Roboters über die Bodenfläche; ein Bearbeitungsmodul zum Ausführen der Tätigkeiten während eines Arbeitungsvorganges; mindestens ein Sensormodul zum Erfassen von Informationen betreffend die Umgebung und/oder betreffend die Bodenfläche; ein Navigationsmodul, das dazu ausgebildet ist, den Roboter anhand einer Karte der Umgebung über die Bodenfläche zu navigieren; und ein Kommunikationsmodul, welches dazu ausgebildet ist mit einer Alarmanlage und/oder einer Überwachungseinheit zu kommunizieren, wobei die Alarmanlage dazu ausgebildet ist, ein Gebiet zu überwachen, und wobei der Roboter dazu ausgebildet ist, das zu überwachende Gebiet innerhalb der Karte zu speichern. Der Roboter ist weiter dazu ausgebildet, eine Nachricht zum Deaktivieren oder Ignorieren eines Alarms an die Alarmanlage und/oder die Überwachungseinheit zu senden, wenn er anhand der Karten detektiert, dass er sich in das zu überwachende Gebiet hinein bewegt; und eine Nachricht zu senden zum Aktivieren oder (wieder) Beachten eines Alarms an die Alarmanlage und/oder die Überwachungseinheit zu senden, wenn er anhand der Karten detektiert, dass er sich aus dem zu überwachenden Gebiet heraus bewegt.

### Kurze Beschreibung der Abbildungen

Die folgenden Abbildungen und die weitere Beschreibung sollen helfen, die Erfindung besser zu verstehen. Die Elemente in den Abbildungen sind nicht unbedingt als Einschränkung zu verstehen, vielmehr wird Wert darauf gelegt, das Prinzip der Erfindung darzustellen. In den Abbildungen bezeichnen gleiche Bezugszeichen gleiche oder ähnliche Komponenten oder Signale mit gleicher oder ähnlicher Bedeutung. In den Abbildungen zeigen:
- Figur 1: beispielhaft eine schematische isometrische Darstellung eines selbstfahrenden Roboters zur autonomen Reinigung von Bodenflächen;
- Figur 2: eine beispielhafte Darstellung eines selbstfahrenden Roboters zur autonomen Reinigung von Bodenflächen an verschiedenen Positionen in einem zu reinigenden Gebiet mit mehreren SensorKomponenten;
- Figur 3: beispielhaft ein erfindungsgemäßes System; und
- Figur 4: in einem Blockschaltbild beispielhaft einen erfindungsgemäßen Roboter in einer Ausführungsform des erfindungsgemäßen Systems.

### Detaillierte Beschreibung

Die im Zusammenhang mit der Bearbeitung einer Bodenfläche beschriebenen Beispiele und technischen Merkmale des mobilen Roboters sind auch auf einen mobilen Roboter zur Ausführung anderer oder zusätzlicher Tätigkeiten übertragbar. Die vom beschriebenen mobilen Roboter ausgeführten Tätigkeiten können beispielsweise auch die Bearbeitung von Bodenflächen, die Inspektion der Bodenfläche oder der Umgebung, den Transport von Gegenständen, die Reinigung von Luft und/oder das Ausführen von Unterhaltungsspielen umfassen. Ein Bearbeitungsmodul ist beispielsweise bei alleiniger Verwendung zur Inspektion nicht zwingend notwendig.

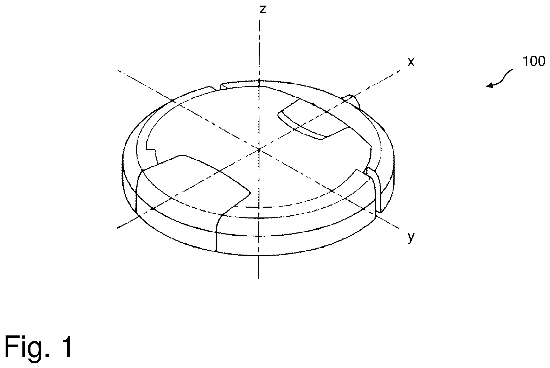

Figur 1 zeigt beispielhaft eine schematische isometrische Darstellung eines selbstfahrenden Roboters 100 zur autonomen Reinigung von Bodenflächen. Die Figur 1 zeigt auch ein kartesisches Koordinatensystem mit dem Ursprung in der Mitte des Roboters 100. Derartige Geräte sind häufig - jedoch nicht notwendigerweise - scheibenförmig ausgebildet. Die Hochachse z geht durch das Zentrum der Scheibe. Die longitudinale Achse ist mit x bezeichnet und die transversale Achse mit y.

Der Roboter 100 umfasst ein Antriebsmodul (nicht dargestellt), welches z.B. Elektromotore, Getriebe und Räder aufweisen kann. Das Antriebsmodul kann z.B. dazu ausgebildet sein, den Roboter in Vorwärts- und Rückwärtsrichtung zu bewegen (in der Darstellung aus Fig. 1 wäre das entlang der x-Achse) und um die Hochachse zu drehen (in der Darstellung aus Fig. 1 wäre das die z-Achse). Somit kann der Roboter - theoretisch - jeden Punkt einer Bodenfläche (die parallel zu der durch die x-Achse und y-Achse definierten Ebene liegt) anfahren. Der Roboter umfasst des weiteren ein Bearbeitungsmodul, wie z.B. ein Reinigungsmodul, das dazu ausgebildet ist, die unter (und/oder neben) dem Roboter befindliche Bodenfläche zu reinigen. Beispielsweise werden Staub und Schmutzpartikel in einen Auffangbehälter gesaugt oder auf mechanische (oder irgendeine andere Weise) in diesen befördert. Derartige Roboter sind - als solche - bekannt.

Die Roboter kommen sowohl im privaten als auch im gewerblichen Bereich zum Einsatz. Im privaten wie auch im gewerblichen Bereich werden jedoch häufig auch Alarmanlagen eingesetzt, die ein Eindringen unerwünschter Personen beispielsweise in Gebäude oder auf Grundstücke erkennen sollen. Wird das unerwünschte Eindringen detektiert, so werden in der Regel entsprechende Aktionen ausgelöst. Beispielsweise wird ein Alarm ausgelöst oder Sicherheitskräfte alarmiert. Das Eindringen unerwünschter Personen wird häufig unter anderem mittels Sensoren, wie zum Beispiel Kameras, detektiert, die Bewegungen in einem zu schützenden Gebiet erkennen. Häufig kommen auch Alarmanlagen zum Einsatz, die als zusätzliche oder alternative Funktion das Erkennen von Bränden oder anderer Unregelmäßigkeiten im zu überwachenden Gebiet umfassen.

Typischerweise verrichten autonome mobile Roboter im gewerblichen Einsatz ihre Tätigkeiten außerhalb der Betriebszeiten, bzw. im privaten Bereich bei Abwesenheit der Eigentümer, um im täglichen Betrieb keine Störungen zu verursachen. Daher überschneiden sich ihre Einsatzzeiten häufig mit den Einsatzzeiten der Alarmanlagen und es kann zu Fehlalarmen kommen, wenn die Alarmanlage die Bewegungen des Roboters registriert und den Roboter fälschlicherweise als Eindringling erkennt.

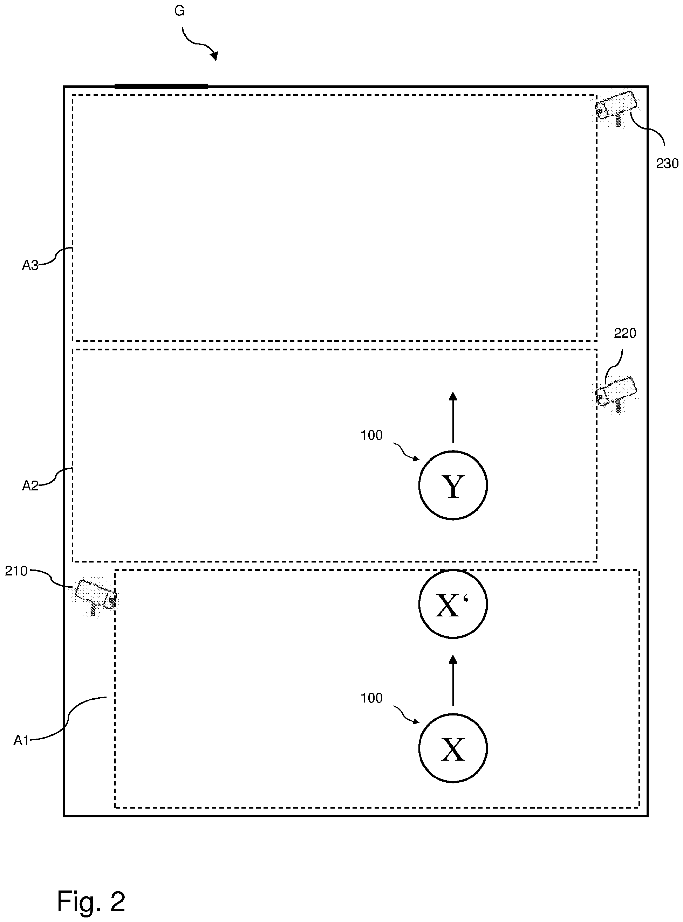

Figur 2 zeigt beispielhaft ein von einer Alarmanlage zu überwachendes Gebiet G, welches hier gleichzeitig das von einem mobilen Roboter 100 zu bearbeitende Gebiet darstellt. In anderen Fällen kann das zu überwachende Gebiet G auch kleiner oder größer sein, als das vom Roboter 100 zu bearbeitende Gebiet. Die Alarmanlage weist drei Sensor-Komponenten 210, 220 und 230 auf, die jeweils einen anderen Bereich des gesamten zu überwachenden Gebietes G überwachen. Die Sensor-Komponente 210 überwacht beispielsweise den Bereich A1, die Sensor-Komponente 220 den Bereich A2 und die Sensor-Komponente 230 den Bereich A3. Die Sensor-Komponenten 210, 220 und 230 sind beispielhaft als Kameras dargestellt. Es kann sich dabei, abhängig davon auf was das Gebiet G überwacht werden soll, zum Beispiel auch um andere Sensoren wie beispielsweise Sensoren zur optischen Erkennung von Objekten oder jegliche andere Art von Sensoren handeln.

Eine Alarmanlage kann lediglich eine, bis hin zu einer Vielzahl von Sensor-Komponenten 210, 220, 230 in einem zu überwachenden Gebiet G aufweisen. In Figur 2 überwacht jede der dargestellten Sensor-Komponenten 210, 220, 230 einen eigenen Bereich A1, A2, A3 des gesamten Gebietes G. Ein Bereich A1, A2, A3 könnte jedoch auch von mehreren Sensor-Komponenten überwacht werden. Die Bereiche A1, A2, A3 könnten sich auch teilweise überlappen, um beispielsweise tote Winkel zu vermeiden.

Befindet sich der Roboter 100 im Bereich A1 beispielsweise an der Position X, so wird er von der Sensor-Komponente 210 erfasst. Die Sensor-Komponenten 220 und 230 dagegen sind derart ausgerichtet, dass sie den Roboter 100 an der Position X nicht detektieren können. Bewegt sich der Roboter 100 während eines Bearbeitungsvorganges im Gebiet G vorwärts, und befindet sich dann beispielsweise an der Position Y, so befindet er sich im Bereich A2 und wird somit nun von der Sensor-Komponente 220 detektiert. Während eines Bearbeitungsvorganges befindet sich der Roboter 100 im gezeigten Beispiel mindestens einmal in jedem der Bereiche A1, A2 und A3 und wird von der jeweiligen Sensor-Komponente 210, 220, 230 detektiert. Dabei kann es vorkommen, dass eine Sensor-Komponente 210, 220, 230 den Roboter 100 fälschlicherweise als ungewollten Eindringling erkennt. Daraufhin kann beispielsweise ein Alarm ausgelöst oder eine Sicherheitsperson alarmiert werden.

Derartige Fehlalarme sind jedoch nicht gewünscht. Aus diesem Grund sieht das erfindungsgemäße System vor, dass der Roboter 100 und die Alarmanlage miteinander kommunizieren und/oder interagieren, um Fehlalarme zu vermeiden.

Im erfindungsgemäßen System kann eine Karte des zu reinigenden Gebietes erstellt und gleichzeitig die entsprechende Position des Roboters 100 in dieser Karte ermittelt werden. Derartige Verfahren sind bekannt und werden als SLAM-Verfahren bezeichnet (engl.: Simultaneous Localization and Mapping, deutsch: simultane Lokalisierung und Kartenerstellung, siehe z.B. H. Durrant-Whyte and T. Bailey: "Simultaneous Localization and Mapping (SLAM): Part I The Essential Algorithms," in: IEEE Robotics and Automation Magazine, Bd. 13, Nr. 2, S. 99-110, Juni 2006). Auf diese Weise wird eine gezielte Navigation ermöglicht. Die Karte und die Position des Roboters 100 in der Karte kann dabei mittels einem oder mehrerer Sensoren ermittelt werden.

Da die durch den Roboter 100 erstellten Karten permanent gespeichert und für nachfolgende Reinigungsvorgänge wieder verwendet werden, ist zum Einen eine wiederholte Erkundung der Umgebung nicht notwendig und es können zum Anderen die Positionen der Sensor-Komponenten 210, 220, 230 der Alarmanlage in den Karten gespeichert werden. Die Positionen der Sensor-Komponenten 210, 220, 230 können dabei beispielsweise durch entsprechende Sensoren im Roboter 100 erkannt werden. Es ist aber zum Beispiel auch möglich, dass die Alarmanlage dem Roboter 100 Informationen darüber zusendet, welche Sensor-Komponenten im Verlauf eines Bearbeitungsvorganges jeweils auf den Roboter 100 ansprechen. Hierfür könnte beispielsweise eine Lernphase des Roboters 100 vorgesehen sein, bei der der Roboter das gesamte Gebiet G abfährt und die Sensor-Komponenten 210, 220, 230 sowie den jeweils überwachten Bereich A1, A2, A3 in die Karten einträgt. Dabei kann es wichtig sein, das relevante Gebiet G lückenlos abzufahren, da manche Sensoren zum Beispiel aufgrund von Reflexionen nicht zusammenhängende Bereiche abdecken. Eine weitere Möglichkeit besteht darin, dass die Positionen der Sensor-Komponenten 210, 220, 230 manuell per Benutzereingabe in die Karten eingetragen werden.

Zusätzlich können vom Roboter 100 während einer Lernphase oder während jedes Bearbeitungsvorganges kartenbasierte Informationen ermittelt und wieder verwendet werden. So können beispielsweise stark verschmutzte Bereiche in der Karte markiert, und bei einem folgenden Reinigungsvorgang besonders behandelt werden.

Die Karten können beispielsweise auch einem Benutzer zur Verfügung gestellt werden. Auf diese Weise kann beispielsweise überprüft werden, ob die ermittelten Bereiche A1, A2, A3 korrekt eingetragen sind. Auch könnten vom Benutzer fehlende Bereiche nachgetragen oder falsch eingetragene Bereiche korrigiert werden. Auch benutzerspezifische Informationen wie beispielsweise Zimmerbezeichnungen können übernommen werden.

Sind die Sensor-Komponenten 210, 220, 230 sowie die von ihnen überwachten Bereiche A1, A2, A3 in der Karte eingetragen, so können beispielsweise durch gezielte Anfragen des Roboters an die Alarmanlage die durch die Bewegung des Roboters 100 ausgelösten Sensor-Komponenten gezielt ignoriert werden oder die Sensor-Komponenten vor der Auslösung durch den Roboter 100 deaktiviert werden. Bewegt sich der Roboter 100 beispielsweise von der Position X über die Position X' an die Position Y, so stellt er anhand der Karten fest, dass er an der Position X' aus dem Bereich A1 in den Bereich A2 wechselt. Der Roboter könnte dann noch bevor er in den Bereich A2 wechselt eine Anfrage an die Alarmanlage senden, dass die Sensor-Komponente 220 deaktiviert oder ignoriert wird. Gleichzeitig kann, wenn der Roboter den bereich A1 verlässt, die Sensor-Komponente 210 wieder aktiviert oder beachtet werden, wenn diese zuvor deaktiviert war oder ignoriert worden ist.

Eine entsprechende Sensor-Komponente 210, 220, 230 kann dabei deaktiviert oder ignoriert werden, noch bevor der Roboter 100 sich im entsprechenden Bereich A1, A2, A3 befindet. Eine Sensor-Komponente 210, 220, 230 könnte jedoch auch erst dann deaktiviert oder ignoriert werden, wenn sich der Roboter bereits in dem entsprechend überwachten Bereich A1, A2, A3 befindet und detektiert wurde. In einem solchen Fall könnte die Alarmanlage zunächst eine Anfrage an den Roboter 100 senden, ob die tatsächliche Position des Roboters 100 und die von der Sensor-Komponente 210, 220, 230 detektierte Position übereinstimmen, um zwischen einem gewünschten Alarm und einem durch den Roboter 100 ausgelösten Fehlalarm zu unterscheiden.

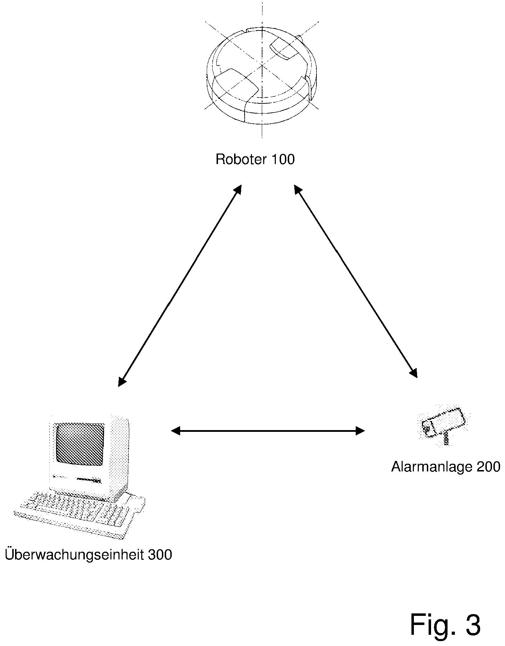

Wie in Figur 3 gezeigt, könnte das erfindungsgemäße System zusätzlich zum Roboter 100 und einer Alarmanlage 200 auch eine zusätzliche externe Einheit aufweisen. Dies könnte beispielsweise eine Überwachungseinheit 300 sein. Die Überwachungseinheit 300 könnte beispielsweise sowohl vom Roboter 100 Informationen über seine aktuelle Position und/oder seine berechnete Route durch das Gebiet G, als auch von der Alarmanlage 200 Informationen über jeweils ansprechende Sensor-Komponenten 210, 220, 230 empfangen und diese verwalten. Die Überwachungseinheit 300 könnte dann, anstatt dem Roboter 100, das Senden von Anfragen zum Deaktivieren oder Ignorieren von Komponenten an die Alarmanlage 200 übernehmen. Diese Funktionen könnten aber ebenso von der Alarmanlage 200 oder dem Roboter 100 selbst übernommen werden und die Überwachungseinheit 300 sozusagen in der Alarmanlage 200 oder dem Roboter 100 integriert sein. Auch die Karten mit den entsprechenden Einträgen können im Roboter 100, in der Alarmanlage 200 oder, falls vorhanden, in der Überwachungseinheit 300 gespeichert sein. Die Überwachungseinheit 300 ist im erfindungsgemäßen System optional.

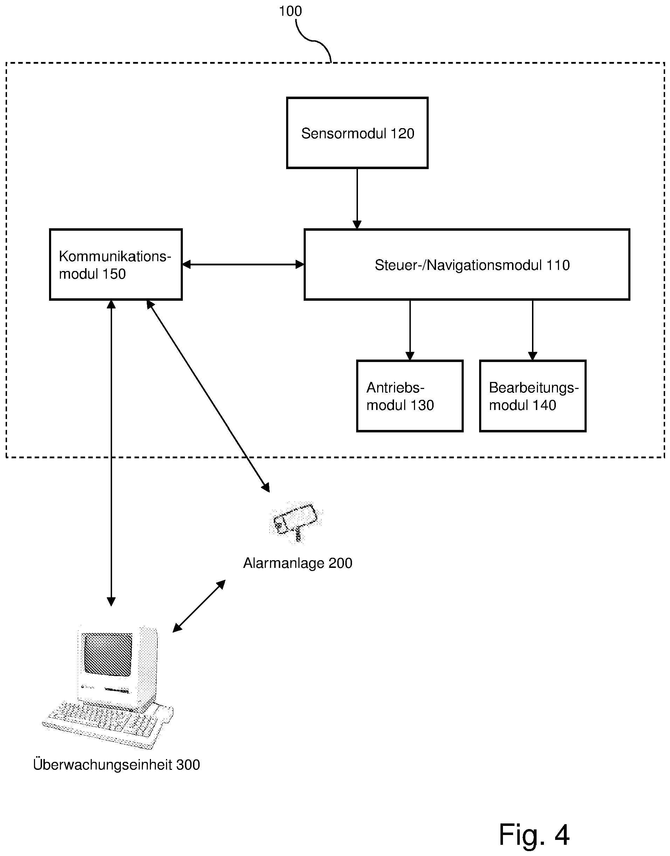

Figur 4 zeigt ebenfalls beispielhaft das erfindungsgemäße System mit einem Roboter 100, einer Alarmanlage 200 sowie einer Überwachungseinheit 300, wobei in einem Blockschaltbild beispielhaft der schematische Aufbau eines erfindungsgemäßen Roboters 100 zum autonomen Bearbeiten (z.B. Reinigen) von Bodenflächen dargestellt ist.

Es sind ein Antriebsmodul 130 und ein Bearbeitungsmodul 140 dargestellt, die bereits oben erwähnt wurden. Beide Module 130 und 140 werden von einem Steuer- und Navigationsmodul 110 (navigation and control module) kontrolliert. Das Navigationsmodul 110 ist dazu ausgebildet, den Roboter während eines Reinigungsvorganges anhand einer Karte der Umgebung über die Bodenfläche zu navigieren. Die Karte kann dabei in einem Speicher des Steuer- und Navigationsmoduls 110, in der Alarmanlage 200 oder in der Überwachungseinheit 300 in Form von Kartendaten (map data) abgelegt sein. Ist die Karte beispielsweise in der Alarmanlage 200 oder in der Überwachungseinheit 300 abgelegt, so kann das Navigationsmodul 110 über ein Kommunikationsmodul 150 auf diese zugreifen.

Über das Kommunikationsmodul 150 könnte der Roboter 100 nicht nur Kartendaten von der Alarmanlage 200 und/oder der Überwachungseinheit 300 abrufen. Die gesamte Kommunikation und Interaktion mit der Alarmanlage 200 und/oder der Überwachungseinheit 300 kann über das Kommunikationsmodul 150 ablaufen, so können auch die Anfragen zum Deaktivieren oder Ignorieren von Komponenten 210, 220, 230 der Alarmanlage 200 über das Kommunikationsmodul 150 gesendet werden.

Da die Kommunikation zwischen Roboter 100 und Alarmanlage 200 und/oder Überwachungseinheit 300 ein sicherheitskritischer Punkt ist, muss eine sichere Kommunikationsschnittstelle eingesetzt werden. Die gesendeten Daten könnten zum Beispiel verschlüsselt werden. Hierfür wäre beispielsweise eine SSL Verschlüsselung (Secure Socket Layer Verschlüsselung) möglich. Auch könnte mit in der Hardware gespeicherten nicht auslesbaren Schlüsseln oder Zertifikaten eine asymmetrisch verschlüsselte Verbindung hergestellt werden. Des weiteren könnten Message-IDs als Verifikation verwendet werden, um beispielsweise Playback-Attacken zu vermeiden. Playback-Attacken sind Attacken mit aufgezeichneten Nachrichten des Roboters 100, welche zu einem späteren Zeitpunkt erneut abgespielt werden, um in gewissen Bereichen A1, A2, A3 die Alarmanlage 200 zu deaktivieren. Message-IDs die in der verschlüsselten Nachricht enthalten sind, könnten einer gewissen Folge gehorchen müssen. Bei falsch versendeten IDs könnte beispielsweise Alarm ausgelöst werden. Die genannten und verschiedene weitere Verschlüsselungsverfahren sind allgemein gekannt und sollen darum nicht näher erläutert werden.

Der Roboter 100 umfasst weiter ein Sensormodul 120 zum Erfassen von Informationen betreffend die Struktur der Umgebung und/oder betreffend Eigenschaften der Bodenfläche. Zu diesem Zweck kann das Sensormodul 120 eine oder mehrere Sensoreinheiten aufweisen, die dazu ausgebildet sind, Informationen zu erfassen, auf deren Basis eine Karte der Umgebung aufgebaut und die Position des Roboters in der Karte lokalisiert werden kann. Zu diesem Zweck geeignete Sensoren sind z.B. Laser-Range-Scanner, Kameras, Triangulationssensoren, Berührungssensoren zum Erkennen eines Zusammenstoßes mit einem Hindernis, etc. Zum Aufbau der Karte und zur gleichzeitigen Positionsbestimmung des Roboters innerhalb der Karte kann, wie bereits beschrieben, ein SLAM-Verfahren eingesetzt werden. Durch das Sensormodul 120 können beispielsweise auch Sensor-Komponenten 210, 220, 230 der Alarmanlage 200 erkannt bzw. detektiert werden, welche anschließend entsprechend in die Karte eingetragen werden können.

Die Sensoreinheiten können beispielsweise auch dazu verwendet werden, eventuelle Unregelmäßigkeiten in dem zu reinigenden Gebiet zu erkennen. Unregelmäßigkeiten können dabei beispielsweise fremde Objekte, Personen, Rauch oder Feuer sein. Der Roboter 100 könnte somit als mobiler Teil der Alarmanlage 200 eingesetzt werden und selbst beispielsweise fremde Objekte oder Bewegungen zum Beispiel mittels optischer Sensoren erkennen. Es wäre aber auch beispielsweise denkbar, dass das Sensormodul 120 Wärmebildkameras oder Sensoren mit ähnlicher Funktion umfasst. Wird einer der Sensoren ausgelöst, so kann dies an die Alarmanlage übermittelt werden, welche dann entsprechende Aktionen einleiten kann.

Berührungssensoren im Sensormodul 120 können beispielsweise eine Kollision detektieren, über Stromsensoren zur Messung des Laststromes der Antriebseinheit kann z.B. erkannt werden, wenn der Roboter (z.B. an den Fransen eines Teppichs) festhängt. Andere Sensoreinheiten können z.B. ein Feststecken des Roboters dadurch detektieren, dass die Antriebsräder durchdrehen. Es können weitere Sensoreinheiten vorgesehen sein, die z.B. dazu ausgebildet sind, den Verschmutzungsgrad des Bodens zu ermitteln. Die erfassten Umgebungsinformationen können zusammen mit einer der jeweiligen Information zugeordneten Position des Roboters auf der Karte an das Steuer- und Navigationsmodul 110 übermittelt werden.

Wird dem Roboter 100 beispielsweise eine Information darüber zur Verfügung gestellt, ob die Alarmanlage aktiv ist oder nicht, so können zum Beispiel verschiedene Reinigungsmodi implementiert werden. Ein uneingeschränkter Reinigungsmodus könnte beispielsweise nur dann ausgeführt werden, wenn die Alarmanlage 200 aktiv ist und somit keine Personen mehr im zu reinigenden Gebiet vermutet werden. Ist die Alarmanlage 200 nicht aktiv, werden also noch Personen im Gebiet G vermutet, könnte nur ein eingeschränkter Reinigungsmodus durchgeführt werden, bei welchem beispielsweise nur wenig frequentierte Bereiche des Gebiets G gereinigt werden. Wenig frequentierte Bereiche können beispielsweise mithilfe der vorhandenen Sensor-Komponenten 210, 220, 230 erkannt werden. Dies kann beispielsweise auch dann möglich sein, wenn die Alarmanlage 200 nicht eingeschaltet, bzw. nicht "scharf" geschaltet ist. Solche Bereiche könnten wiederum in den gespeicherten Karten eingetragen werden.

Erhält der Roboter 100 von der Alarmanlage 200 die Information, dass sich diese nun eingeschaltet hat, kann der Roboter 100 entweder direkt mit dem Bearbeitungsvorgang beginnen, oder erst nach Ablauf eines einstellbaren Timers. Zudem könnte der Roboter 100 einen begonnenen Bearbeitungsvorgang unterbrechen oder in einen anderen Bearbeitungsmodus wechseln, wenn er von der Alarmanlage 200 eine Information über deren Deaktivierung erhält.

Weiterhin wäre es möglich, dass der Roboter 100 durch die Alarmanlage 200 in einen bestimmten Bereich geschickt wird. Detektiert die Alarmanlage 200 beispielsweise Unregelmäßigkeiten im Bereich A1, kann der Roboter 100 in die Alarmzone gesendet werden, um dort beispielsweise Aufnahmen der Umgebung zu machen. Beispielsweise könnten Bilder oder Videos aufgenommen werden. Diese könnten an Einsatzkräfte übermittelt werden, damit diese sich vorab ein Bild von der Alarmzone machen können. Das permanente Speichern der Karten ist hierbei von Vorteil, da eine schnelle und sichere Anfahrt durch den Roboter 100 ermöglicht wird.

Bei Systemen, bei welchen der Roboter 100 selbst die Informationen über seine Position und die an dieser Position ansprechenden Alarmsensoren zusammenführt und verwaltet ergeben sich verschiedene Vorteile. So kann der Roboter 100 beispielsweise bei der Einrichtung der Alarmanlage 200 eingesetzt werden. So könnte beispielsweise sichergestellt werden, dass mit einer möglichst geringen Anzahl an Sensor-Komponenten 210, 220, 230 das gesamte Gebiet G mit einer gewünschten Überlappung der Bereiche A1, A2, A3 abgedeckt wird. Der Roboter 100 kann dabei eine Karte der Abdeckung automatisch erstellen. Diese Karte kann anschließend manuell überprüft werden. Des weiteren kann der Roboter 100, da er selbst seine geplanten zukünftigen Bewegungen kennt, vorausschauend Bereiche bzw. Sensor-Komponenten deaktivieren, indem er entsprechende Anfragen an die Alarmanlage 200 sendet.

Es ergeben sich jedoch auch Vorteile daraus, wenn die Alarmanlage 200 die Position des Roboters 100 sowie die darauf ansprechenden Bereiche verwaltet. Die Alarmanlage 200 behält so jederzeit die Hoheit über das sicherheitsrelevante System. Die Alarmanlage 200 kann die Informationen, welche sie vom Roboter 100 erhält, auf Konsistenz überprüfen und damit beispielsweise elektronischen Einbruchsversuchen zuvorkommen.

Ein elektronischer Einbruchsversuch fände beispielsweise dann statt, wenn ein Einbrecher ein Gerät verwendet, welches es schafft mit der Alarmanlage 200 zu kommunizieren und dabei vorgibt der Roboter 100 zu sein. Auf diese Weise könnte ein Einbrecher versuchen, beliebige Komponenten 210, 220, 230 auszuschalten. Die Alarmanlage 200 könnte dem entgegenwirken, wenn sie erhaltene Anfragen auf logische Konsistenz überprüft. So könnte beispielsweise bei Nichteinhaltung bestimmter Regeln den Anfragen nicht stattgegeben werden. So könnte zum Beispiel eine Mindestverweildauer des Roboters 100 in bestimmten Bereichen A1, A2, A3 gefordert werden. Es könnte aber beispielsweise auch nur eine bestimmte maximale Anzahl an nebeneinander liegenden Sensor-Komponenten 210, 220, 230 gleichzeitig deaktivierbar sein. Derartige Logik-Prüfungen können durch die Information der Roboterposition und die Karte mit den eingetragenen Überwachungsbereichen A1, A2, A3 der Sensor-Komponenten 210, 220, 230 erheblich vereinfacht werden.

Statt vom Roboter 100 oder der Alarmanlage 200 können Aufgaben auch von einer Überwachungseinheit 300 übernommen werden, sofern eine solche im System vorgesehen ist.

Um Fehlalarme sicher zu vermeiden könnten für die Alarmanlage 200 auch zusätzliche Sensoren verwendet werden, die nicht auf den Roboter 100 ansprechen. Dabei könnten beispielsweise physikalische Unterschiede zwischen Mensch und Roboter 100 genutzt werden. Beispielsweise könnten Sensoren verwendet werden, die die Temperatur des Objekts messen können und nur bei Temperaturen welche nahe genug an der menschlichen Körpertemperatur liegen Alarm auslösen. Es könnten aber beispielsweise auch Sensoren zum Einsatz kommen, welche die Form des Roboters 100 erkennen können.

Die Funktion eines erfindungsgemäßen Roboters 100 zum autonomen Bearbeiten von Bodenflächen bzw. eines erfindungsgemäßen Systems wird im folgenden anhand von drei Fallbeispielen näher erläutert.

Erstes Beispiel: Eine Firma setzt einen oder auch mehrere Reinigungsroboter 100 für die Reinigung ihrer Produktionshallen ein. Die Hallen sind mittels einer Alarmanlage 200 geschützt. Die Alarmanlage 200 umfasst dabei mehrere Sensor-Komponenten 210, 220, 230 und unterteilt die Hallen dabei in mehrere Bereiche A1, A2, A3. Nach einem ersten Erkunden der zu reinigenden Fläche besitzt der Roboter 100 eine Karte in welcher er sich lokalisieren kann. Die Alarmanlage 200 besitzt ein Modul zur Kommunikation mit dem Roboter 100. Über dieses Interface kann sich der Roboter 100 bei der Alarmanlage 200 anmelden und mit ihr kommunizieren. Dabei können auch Informationen über Positionen der Sensor-Komponenten 210, 220, 230 und deren Erfassungsbereich A1, A2, A3 ausgetauscht werden, welche vom Roboter 100 in die Karte eingetragen werden.

Der Roboter kann anhand der Karteninformationen seine Reinigungsstrategie an die Bereiche A1, A2, A3 anpassen, um die Übergänge zwischen unterschiedlichen Bereichen zu minimieren. Wann immer der Roboter 100 in den Bereich einer neuen Sensor-Komponente kommt, wird vom Roboter 100 noch vordem Einfahren in den entsprechenden Bereich eine Kommunikation mit der Alarmanlage 200 initiiert. Dabei wird der Alarmanlage 200 die Information übermittelt, dass der Roboter 100 nun diesen Bereich betritt. Die Alarmanlage 200 kann dann den aktuellen Alarmzustand der entsprechenden Sensor-Komponente speichern und diese falls nötig deaktivieren oder ignorieren. Nach Erledigung sendet die Alarmanlage 200 eine Nachricht an den Roboter 100, in welcher sie mitteilt, dass der Bereich nun befahrbar ist. Der Roboter wartet vor der Grenze auf diese Antwort und kann seine Fahrt erst bei positiver Antwort fortsetzen.

Wenn aus nicht näher spezifizierten Gründen der Roboter 100 zu einem Zeitpunkt einen bestimmten Bereich nicht befahren soll, kann die Alarmanlage 200 auch eine negative Antwort an den Roboter 100 senden. Der Roboter 100 wird dadurch veranlasst, seine Planung zu ändern und diesen Bereich erst zu einem späteren Zeitpunkt zu befahren oder gar nicht zu reinigen.

Wenn ein Alarmzonenbereich wieder verlassen wird, sendet der Roboter 100 wieder die entsprechende Information an die Alarmanlage 200, damit der Alarmzustand dieses Bereiches wieder hergestellt werden kann.

Zweites Beispiel: Ein Reinigungsroboter 100 erkundet ein zu reinigendes Haus und erstellt dabei eine Karte in welcher er sich selbst lokalisieren kann. Die im Haus eingebaute Alarmanlage 200 weist ein Kommunikationsmodul 150 auf, mit welchem eine sichere verschlüsselte Verbindung mit dem Roboter 100 hergestellt werden kann. Zusätzlich weist das System eine spezielle Software auf, mit welcher in Kooperation zwischen der Alarmanlage 200 und dem Roboter 100 eine Karte erstellt und die Alarmbereiche ausgetestet werden können.

Bei folgenden Bearbeitungsvorgängen muss der Roboter 100 während seiner Route regelmäßig seine Positionskoordinaten und den nächsten Wegpunkt an die Alarmanlage 200 übertragen. Auf diese Weise kann die Alarmanlage 200, wann immer eine Sensor-Komponente anspricht, die Position sowie den geplanten Weg des Roboters 100 mit dem ausgelösten Alarm abgleichen. Bei entsprechender Übereinstimmung kann die Alarmanlage 200 mit ausreichender Sicherheit davon ausgehen, dass der Roboter 100 Auslöser des Alarms war und keine weiteren Aktionen eingeleitet werden müssen. Liegt keine Übereinstimmung vor, so kann beispielsweise Alarm ausgelöst und/oder eine zuständige Person informiert werden.

Drittes Beispiel: Eine Firma schützt ihre Räumlichkeiten mit einer Alarmanlage 200. Des Weiteren besitzt sie einen Roboter 100, welcher eine Karte erstellen und mit Hilfe dieser Karte navigieren kann. Die Alarmanlage 200 und der Roboter 100 können miteinander kommunizieren. Dies kann entweder direkt oder mit Zusatzmodulen implementiert sein.

Wird ein Alarm ausgelöst, kann die Alarmanlage 200 den Roboter 100 zu einer Position schicken, von der aus der Roboter 100 das Gebiet um den ausgelösten Sensor herum beobachten kann. Der Roboter 100 kann beispielsweise Bilder, Videos oder zusätzliche Sensordaten aufnehmen. Diese Daten können dann an die Alarmanlage 200 gesendet werden, um Einsatzkräften zusätzliche Informationen zur Verfügung zu stellen. Der Roboter 100 könnte dabei auch zur Interaktion mit dem Verursacher dienen. So könnte ein Eindringling beispielsweise dazu aufgefordert werden, den Bereich oder das Gebäude zu verlassen. Auch könnte eine Aufforderung zum Eingeben eines Codes ausgegeben werden. So könnten beispielsweise berechtigte Personen, welche fälschlicherweise als Eindringlinge erkannt wurden durch Eingabe eines Codes den Alarm ausschalten.

Insbesondere beim Einsatz mehrerer Roboter 100 in einem Gebiet G könnten die Roboter 100 derart koordiniert werden, um einen möglichen Einbrecher an der Flucht zu hindern.

Dieses Verfahren könnte selbstverständlich auch bei anderen Arten von Alarmen, beispielsweise einem Feueralarm, zum Einsatz kommen, um festzustellen, ob tatsächlich ein Brand vorliegt oder ob ein Fehlalarm ausgelöst wurde. Speziell beim Einsatz für Feueralarme könnten weitere besondere Sensoren wie beispielsweise Rauch- und Gassensoren eingesetzt werden. Auch könnten entsprechende Sensoren implementiert sein, welche Personen auf andere Art und Weise als durch Bewegungen detektieren können. So könnten beispielsweise verletzte Personen erkannt werden. Somit wäre es möglich der Feuerwehr im Brandfall bessere Informationen zur Verfügung zu stellen. Der Roboter könnte auch versuchen mit Personen Kontakt aufzunehmen um festzustellen, ob diese bei Bewusstsein sind.

Die im Zusammenhang mit der Bearbeitung einer Bodenfläche beschriebenen Beispiele und technischen Merkmale des mobilen Roboters sind auch auf einen mobilen Roboter zur Ausführung anderer Tätigkeiten übertragbar. Alle Tätigkeiten, welche von autonomen selbstfahrenden Robotern übernommen werden können sind hierbei denkbar. Diese Tätigkeiten können beispielsweise die Inspektion der Bodenfläche oder der Umgebung, den Transport von Gegenständen, die Reinigung von Luft und/oder das Ausführen von Unterhaltungsspielen umfassen. Das beschriebene Bearbeitungsmodul 140 ist bei Robotern, welche andere oder zusätzliche Tätigkeiten als die Bearbeitung von Böden ausführen entsprechend ausgebildet. In manchen Fällen ist ein Bearbeitungsmodul 140 nicht notwendig, wie beispielsweise beim alleinigen Überwachen oder Inspizieren von Räumen, Flächen oder Gegenständen.

Während die Erfindung anhand einer beispielhaften Ausgestaltung beschrieben wurde, lässt sich die Erfindung demnach zusätzlich innerhalb des Grundgedankens und des Schutzumfangs dieser Offenbarung modifizieren. Die vorliegende Anmeldung soll daher zahlreiche Varianten, Einsatzmöglichkeiten oder Adaptionen der Erfindung unter Verwendung von deren grundsätzlichen Prinzipien abdecken. Außerdem ist die vorliegende Anmeldung dazu gedacht, derartige Abweichungen von der vorliegenden Offenbarung abzudecken, die bekannte oder übliche Praxis im Stand der Technik darstellen, auf dem die vorliegende Erfindung beruht. Die Erfindung ist nicht auf die oben angegebenen Einzelheiten beschränkt, sondern lässt sich gemäß den beigefügten Ansprüchen modifizieren.

## Patentansprüche

1. System umfassend einen mobilen Roboter (100) zum autonomen Ausführen von Tätigkeiten und eine stationär angebrachte Alarmanlage (200) zum Überwachen eines Gebietes (G),
wobei der Roboter (100) und die Alarmanlage (200) dazu ausgebildet sind, miteinander über eine Kommunikationsverbindung zu kommunizieren;
wobei der mobile Roboter (100) dazu ausgebildet ist, anhand einer Karte der Umgebung über eine Bodenfläche durch zumindest einen Teil des Gebietes (G) zu navigieren und seine Position in der Karte zu lokalisieren;
**dadurch gekennzeichnet, dass** das System dazu ausgebildet ist,
anhand der Karte der Umgebung zu detektieren, ob sich der mobile Roboter (100) in das zu überwachende Gebiet (G) hinein bewegt, und zu detektieren, ob sich der mobile Roboter (100) aus dem zu überwachenden Gebiet (G) heraus bewegt,
ein Auslösen eines Alarms durch die Alarmanlage (200) zu verhindern, wenn detektiert wurde, dass sich der mobile Roboter (100) in das zu überwachende Gebiet (G) hinein bewegt; und
das Auslösen des Alarms durch die Alarmanlage (200) wieder zu ermöglichen, wenn detektiert wurde, dass sich der mobile Roboter aus dem zu überwachenden Gebiet (G) heraus bewegt.

2. System gemäß Anspruch 1, bei dem die Alarmanlage (200) mindestens eine Sensor-Komponente (210, 220, 230) umfasst, die dazu ausgebildet ist, das gesamte zu überwachende Gebiet (G) oder einen Teilbereich (A1, A2, A3) des zu überwachenden Gebietes (G) zu überwachen.

3. System gemäß Anspruch 2, bei dem die Alarmanlage dazu ausgebildet ist, die mindestens eine Sensor-Komponente (210, 220, 230) zu deaktivieren oder zu ignorieren, um ein Auslösen eines Alarms zu verhindern, wenn sich der mobile Roboter (100) in den von der jeweiligen Sensor-Komponente (210, 220, 230) überwachten Bereich (A1, A2, A3) hinein bewegt.

4. System gemäß Anspruch 3, bei dem die Alarmanlage dazu ausgebildet ist, die mindestens eine Sensor-Komponente (210, 220, 230) wieder zu aktivieren oder wieder zu beachten, um ein Auslösen eines Alarms wieder zu ermöglichen, wenn sich der mobile Roboter (100) aus dem von der jeweiligen Sensor-Komponente (210, 220, 230) überwachten Bereich (A1, A2, A3) heraus bewegt.

5. System gemäß einem der Ansprüche 2 bis 4, bei dem die mindestens eine Sensor-Komponente (210, 220, 230) eine Kamera, ein Bewegungsmelder, eine Lichtschranke, oder ein Trittschalter ist.

6. System gemäß einem der Ansprüche 1 bis 4, bei dem der mobile Roboter (100) dazu ausgebildet ist, während des Navigierens autonom Tätigkeiten auszuführen, insbesondere das Bearbeiten oder Reinigen von Bodenflächen und/oder die Inspektion einer Umgebung oder von in der Umgebung befindlichen Gegenständen und/oder den Transport von Gegenständen und/oder die Reinigung von Luft.

7. System gemäß einem der Ansprüche 1 bis 6, bei dem der mobile Roboter (100) und die Alarmanlage (200) dazu ausgebildet sind, miteinander über einen oder mehrere verschlüsselte Kommunikationskanäle zu kommunizieren.

8. System gemäß einem der Ansprüche 1 bis 7, das weiterhin eine Überwachungseinheit (300) umfasst, welche mit dem mobilen Roboter (100) und/oder der Alarmanlage (200) kommunizieren kann.

9. System gemäß Anspruch 8, bei dem die Karte in der Alarmanlage (200), in der Überwachungseinheit (300) oder in einem Navigationsmodul (110) des mobilen Roboters (100) gespeichert wird.

10. System gemäß Anspruch 9, bei dem die Karte durch eine Lernfahrt des mobilen Roboters (100) erstellt wird, bei welcher der mobile Roboter (100) das zu überwachende Gebiet (G) abfährt und währenddessen die Karte erstellt.

11. System gemäß einem der Ansprüche 1 bis 10, bei dem der mobile Roboter (100) im zu überwachenden Gebiet (G) angebrachte Sensor-Komponenten (210, 220, 230) sowie die von diesen überwachten Bereiche (A1, A2, A3) erkennt und in die erstellte Karte einträgt und/oder die im zu überwachenden Gebiet (G) angebrachten Sensor-Komponenten (210, 220, 230) sowie die von diesen überwachten Bereiche (A1, A2, A3) manuell von einem Nutzer in die Karte eingetragen werden.

12. System gemäß einem der vorangehenden Ansprüche, bei dem die Alarmanlage dazu ausgebildet ist, einen Alarm auszulösen, wenn von einer Sensorkomponente ein fremdes Objekt, eine oder mehrere Personen, Rauch oder Feuer oder eine sonstige Störung in mindestens einem Bereich (A1, A2, A3), in dem sich der mobile Roboter nicht befindet, detektiert wird.

13. System gemäß Anspruch 12, bei dem der mobile Roboter (100) anhand der gespeicherten Karte in den Bereich (A1, A2, A3) navigiert, in welchem der Alarm ausgelöst wurde.

14. System gemäß einem der vorangehenden Ansprüche, bei dem der mobile Roboter dazu ausgebildet ist, Tätigkeiten abhängig vom Zustand der Alarmanlage (200) und/oder der Sensor-Komponenten (210, 220, 230) auszuführen.

15. System gemäß einem der vorangehenden Ansprüche, welches dazu ausgebildet ist, Bereiche (A1, A2, A3) des zu überwachenden Gebietes (G) zu detektieren, in welchen sich keine oder nur wenige Personen aufhalten.

16. System gemäß Anspruch 15, das weiterhin dazu ausgebildet ist, den mobilen Roboter (100) nur oder bevorzugt in solchen Bereichen (A1, A2, A3) navigieren zu lassen, in welchen sich keine oder nur wenig Personen aufhalten.

17. System gemäß einem der vorangehenden Ansprüche, bei dem der mobile Roboter (100) dazu ausgebildet ist, seine Tätigkeiten in einem Bereich (A1, A2, A3) abzuschließen, bevor er in einen nächsten Bereich (A1, A2, A3) navigiert.

18. Verfahren zum Betreiben eines mobilen Roboters (100) zum autonomen Ausführen von Tätigkeiten in einem von einer Alarmanlage (200) überwachten Gebiet (G); das Verfahren umfasst folgendes:
Speichern und Verwalten wenigstens einer Karte der Umgebung, wobei das überwachte Gebiet zumindest Teilweise in der Karte enthalten ist;
Navigieren des mobilen Roboters über die Bodenfläche durch zumindest einen Teil des Gebietes (G) anhand der gespeicherten Karte der Umgebung;
Detektieren, anhand der Karte, ob sich der mobile Roboter (100) in das zu überwachende Gebiet (G) hinein bewegt und ob sich der mobile Roboter (100) aus dem zu überwachenden Gebiet (G) heraus bewegt;
Verhindern einer Alarm-Auslösung durch die Alarmanlage (200), wenn detektiert wurde, dass sich der mobile Roboter (100) in das zu überwachende Gebiet (G) hinein bewegt; und
Wiederermöglichen einer Alarm-Auslösung durch die Alarmanlage (200), wenn detektiert wurde, dass sich der mobile Roboter aus dem zu überwachenden Gebiet (G) heraus bewegt.

19. Mobiler Roboter (100) zum autonomen Ausführen von Tätigkeiten; der mobile Roboter (100) weist folgendes auf:
ein Antriebsmodul (130) zur Bewegung des mobilen Roboters (100) über eine Bodenfläche;
ein Bearbeitungsmodul (140) zum Ausführen der Tätigkeiten während eines Bearbeitungsvorganges;
mindestens ein Sensormodul (120) zum Erfassen von Informationen betreffend die Umgebung und/oder betreffend die Bodenfläche;
ein Kommunikationsmodul (150), welches dazu ausgebildet ist mit einer Alarmanlage (200) und/oder einer Überwachungseinheit (300) zu kommunizieren, wobei die Alarmanlage (200) dazu ausgebildet ist, ein Gebiet (G) zu überwachen; und
ein Navigationsmodul (110), welches dazu ausgebildet ist den mobilen Roboter (100) anhand einer Karte der Umgebung über die Bodenfläche durch zumindest einen Teil des Gebiets (G) zu navigieren, wobei der mobile Roboter (100) dazu ausgebildet ist
das zu überwachende Gebiet (G) innerhalb der Karte zu speichern;
eine Anfrage zum Deaktivieren oder Ignorieren der Alarmanlage (200) an die Alarmanlage (200) und/oder die Überwachungseinheit (300) zu senden, wenn er anhand der Karte detektiert, dass er sich in das zu überwachende Gebiet (G) hinein bewegt; und
eine Anfrage zum Aktivieren oder wieder Beachten der Alarmanlage (200) an die Alarmanlage (200) und/oder die Überwachungseinheit (300) zu senden, wenn er anhand der Karte detektiert, dass er sich aus dem zu überwachenden Gebiet (G) heraus bewegt.

## Claims

1. System comprising a mobile robot (100) for autonomously performing activities and a statically fitted alarm installation (200) for monitoring a region (G),
wherein the mobile robot (100) and the alarm installation (200) are configured to communicate with one another via a communication link;
wherein the mobile robot (100) is configured to navigate with the help of a map of the environment across a floor space through at least a section of the region (G) and to locate a position of itself on the map;
**characterized in that** the system is configured to:
detect with the help of the map of the environment, whether the mobile robot (100) is moving into the region (G) to be monitored, and to detect, whether the mobile robot (100) is moving out of the region (G) to be monitored,
prevent a triggering of an alarm by the alarm installation (200), when it was detected that the mobile robot (100) is moving into the region (G) to be monitored; and
enable again the triggering of the alarm by the alarm installation (200), when it was detected that the mobile robot (100) is moving out of the region (G) to be monitored.

2. System according to claim 1, wherein the alarm installation (200) comprises at least one sensor component (210, 220, 230) configured to monitor the entire region (G) to be monitored or a subarea (A1, A2, A3) of the region (G) to be monitored.

3. System according to claim 2, wherein the alarm installation is configured to deactivate or to ignore the at least one sensor component (210, 220, 230) in order to prevent a triggering of an alarm when the mobile robot (100) moves into the area (A1, A2, A3) monitored by the respective sensor component (210, 220, 230).

4. System according to claim 3, wherein the alarm installation is configured to reactivate or to heed again the at least one sensor component (210, 220, 230) in order to enable again a triggering of an alarm when the mobile robot (100) moves out of the area (A1, A2, A3) monitored by the respective sensor component (210, 220, 230).

5. System according to one of the claims 2 to 4, wherein the at least one sensor component (210, 220, 230) is a camera, a motion detector, a light barrier or a safety mat.

6. System according to one of the claims 1 to 4, wherein the mobile robot (100) is configured to autonomously perform activities during the navigation, in particular treating or cleaning surfaces and/or inspecting an environment or objects present in the environment and/or transporting objects and/or cleaning the air.

7. System according to one of the claims 1 to 6, wherein the mobile robot (100) and the alarm installation (200) are configured to communicate with one another via one or more encrypted communication channels.

8. System according to one of the claims 1 to 7, further comprising a monitoring unit (300) which can communicate with the mobile robot (100) and/or with the alarm installation (200).

9. System according to claim 8, wherein the map is stored in the alarm installation (200), in the monitoring unit (300) or in a navigation module (110) of the mobile robot (100).

10. System according to claim 9, wherein the map is created by a learning trip of the mobile robot (100), during which the mobile robot (100) covers the region (G) to be monitored and creates the map in the process.

11. System according to one of the claims 1 to 10, wherein the mobile robot (100) identifies sensor components (210, 220, 230) fitted in the region (G) to be monitored as well as the areas (A1, A2, A3) monitored by them and enters them in the created map and/or the sensor components (210, 220, 230) fitted in the region (G) to be monitored as well as the areas (A1, A2, A3) monitored by them are manually entered in the map by a user.

12. System according to one of the previous claims, wherein the alarm installation is configured to trigger an alarm when a foreign object, one or several persons, smoke or fire or another disturbance in at least one area (A1, A2, A3) in which the mobile robot in not situated is detected by a sensor component.

13. System according to claim 12, wherein the mobile robot (100) navigates with the help of the stored map in the area (A1, A2, A3) in which the alarm was triggered.

14. System according to one of the previous claims, wherein the mobile robot is configured to perform activities depending on the state of the alarm installation (200) and/or the sensor components (210, 220, 230).

15. System according to one of the previous claims, the system being configured to detect areas (A1, A2, A3) of the region (G) to be monitored in which there are no or only a few persons.

16. System according to claim 15, the system being further configured to allow the mobile robot (100) to navigate only or preferably in such areas (A1, A2, A3) in which there are no or only a few persons.

17. System according to one of the previous claims, wherein the mobile robot (100) is configured to conclude its activities in an area (A1, A2, A3) before it navigates to a next area (A1, A2, A3).

18. Method for operating a mobile robot (100) for autonomously performing activities in a region (G) monitored by an alarm installation (200); the method comprising the following steps of:
storing and managing at least one map of the environment, the region to be monitored being at least partially included in the map;
navigating the mobile robot (100) across a floor space through at least one section of the region (G) with the help of the stored map of the environment;
detecting, with the help of the map, whether the mobile robot (100) is moving into the region (G) to be monitored and whether the mobile robot (100) is moving out of the region (G) to be monitored;
preventing a triggering of an alarm by the alarm installation (200) when it is detected that the mobile robot (100) moves into the region (G) to be monitored; and
enabling a triggering of an alarm again by the alarm installation (200) when it is detected that the mobile robot moves out of the region (G) to be monitored.

19. Mobile robot (100) for autonomously performing activities; the mobile robot (100) comprising:
a drive module (130) for moving the mobile robot (100) across a floor space;
a treatment module (140) for performing activities during a treatment process;
at least one sensor module (120) for acquiring information relating to the environment and/or relating to the floor space;
a communication module (150) configured to communicate with an alarm installation (200) and/or a monitoring unit (300), the alarm installation (200) being configured to monitor a region (G); and
a navigation module (110) configured to navigate the mobile robot (100) with the help of a map of the environment across the floor space through at least one section of the region (G), the mobile robot (100) being configured to:
store the region (G) to be monitored inside the map;
send a request to deactivate or ignore the alarm installation (200) to the alarm installation (200) and/or the monitoring unit (300) when it detects with the help of the map that it is moving into the region (G) to be monitored; and
send a request to activate or heed the alarm installation (200) again to the alarm installation (200) and/or the monitoring unit (300) when it detects with the help of the map that it is moving out of the region (G) to be monitored.

## Revendications

1. Système comprenant un robot mobile (100) destiné à effectuer des activités de manière autonome et un système d'alarme (200) monté de manière stationnaire destiné à surveiller une zone (G),
le robot (100) et le système d'alarme (200) étant adaptés pour communiquer entre eux via une liaison de communication ;
le robot (100) étant adapté pour naviguer à l'aide d'une carte de l'environnement sur une surface de sol sur au moins une partie de la zone (G) et de localiser sa position sur la carte ;
**caractérisé en ce que** le système est adapté pour :
détecter à l'aide d'une carte de l'environnement si le robot mobile (100) se dirige vers la zone (G) à surveiller et détecter si le robot mobile (100) se dirige hors de la zone (G) à surveiller ;
empêcher un déclenchement d'une alarme par le système d'alarme (200) quand on détecte que le robot mobile se dirige vers la zone (G) à surveiller ; et
rétablir le déclenchement de l'alarme par le système d'alarme (200) quand on détecte que le robot mobile se dirige hors de la zone (G) à surveiller.

2. Système selon la revendication 1, dans lequel le système d'alarme (200) comprend au moins un composant capteur (210, 220, 230) adapté pour surveiller l'intégralité de la zone (G) à surveiller ou une portion (A1, A2, A3) de la zone (G) à surveiller.

3. Système selon la revendication 2, dans lequel le système d'alarme est adapté pour désactiver ou ignorer le ou les composants capteur (210 220 230), afin d'empêcher un déclenchement d'une alarme, quand le robot mobile (100) se dirige vers le domaine (A1, A2, A3) respectivement surveillé par le composant capteur (210, 220, 230).

4. Système selon la revendication 3, dans lequel le système d'alarme est adapté pour réactiver ou prendre de nouveau en considération le ou les composants capteur (210 220 230), afin de rétablir un déclenchement d'une alarme, quand le robot mobile (100) se dirige hors du domaine (A1, A2, A3) respectivement surveillé par le composant capteur (210, 220, 230).

5. Système selon l'une des revendications 2 à 4, dans lequel le ou les composants capteur (210, 220, 230) sont une caméra, un détecteur de mouvement, une barrière lumineuse ou un tapis sensible.

6. Système selon l'une des revendications 1 à 4, dans lequel le robot mobile (100) est adapté pour effectuer des activités de manière autonome pendant la navigation, en particulier traiter ou nettoyer des surfaces de sol et/ou inspecter un environnement ou des objets se trouvant dans l'environnement et/ou transporter des objets et/ou nettoyer l'air.

7. Système selon l'une des revendications 1 à 6, dans lequel le robot mobile (100) et le système d'alarme (200) sont adaptés pour communiquer entre eux via un ou plusieurs canaux de communication cryptés.

8. Système selon l'une des revendications 1 à 7, comprenant en outre une unité de surveillance (300), laquelle peut communiquer avec le robot mobile (100) et/ou le système d'alarme (200).

9. Système selon la revendication 8, dans lequel la carte est stockée dans le système d'alarme (200), dans l'unité de surveillance (300) ou dans un module de navigation (110) du robot mobile (100).

10. Système selon la revendication 9, dans lequel la carte est créée par une course d'apprentissage du robot mobile (100), au cours de laquelle le robot mobile (100) survole la zone (G) à surveiller et crée la carte pendant ce temps.

11. Système selon l'une des revendications 1 à 10, dans lequel le robot mobile (100) identifie les composants capteur (210, 220, 230) placés dans la zone (G) à surveiller ainsi que les domaines (A1, A2, A3) surveillés par ceux-ci et les rentre dans la carte créée et/ou les composants capteur (210, 220, 230) placés dans la zone (G) à surveiller ainsi que les domaines (A1, A2, A3) surveillés par ceux-ci sont rentrés manuellement dans la carte par un utilisateur.

12. Système selon l'une des revendications précédentes, dans lequel le système d'alarme est adapté pour déclencher une alarme, quand un objet étranger, une ou plusieurs personnes, de la fumée ou du feu ou une autre perturbation sont détectés dans au moins un domaine (A1, A2, A3) dans lequel le robot mobile (100) ne se trouve pas.

13. Système selon la revendication 12, dans lequel le robot mobile (100) navigue à l'aide de la carte stockée vers le domaine (A1, A2, A3) dans lequel l'alarme a été déclenchée.

14. Système selon l'une des revendications précédentes, dans lequel le robot mobile est adapté pour effectuer des activités en fonction de l'état du système d'alarme (200) et/ou des composants capteurs (210, 220, 230).

15. Système selon l'une des revendications précédentes, lequel est adapté pour détecter des domaines (A1, A2, A3) de la zone (G) à surveiller dans lesquels il n'y a personne ou que peu de gens.

16. Système selon la revendication 15, lequel est en outre adapté pour laisser naviguer le robot mobile (100) uniquement ou préférablement dans ces domaines (A1, A2, A3) dans lesquels il n'y a personne ou que peu de gens.

17. Système selon l'une des revendications précédentes, dans lequel le robot mobile (100) est adapté pour achever ses activités dans un domaine (A1, A2, A3) avant de naviguer vers un prochain domaine (A1, A2, A3).

18. Procédé destiné à faire fonctionner un robot mobile (100) destiné à effectuer des activités de manière autonome dans une zone (G) surveillée par un système d'alarme (200) ; le procédé comprend les étapes suivantes :
le stockage et la gestion d'au moins une carte de l'environnement, la zone surveillée étant comprise au moins en partie dans la carte ;
la navigation du robot mobile sur une surface de sol sur au moins une partie de la zone (G) à l'aide de la carte de l'environnement stockée ;
le fait de détecter, à l'aide de la carte, si le robot mobile (100) se dirige vers la zone (G) à surveiller et si le robot mobile (100) se dirige hors de la zone (G) à surveiller ;
le fait d'empêcher un déclenchement d'alarme par le système d'alarme (200) quand on détecte que le robot mobile se dirige vers la zone (G) à surveiller ; et
le rétablissement d'un déclenchement d'alarme par le système d'alarme (200) quand on détecte que le robot mobile se dirige hors de la zone (G) à surveiller.

19. Robot mobile (100) destiné à effectuer des activités de manière autonome ; le robot mobile (100) comprend :
un module d'entraînement (130) destiné à déplacer le robot mobile (100) sur la surface de sol ;
un module de traitement (140) destiné à effectuer des activités pendant un processus de traitement ;
au moins un module capteur (120) destiné à acquérir des informations concernant l'environnement et/ou concernant la surface de sol ;
un module de communication (150) adapté pour communiquer avec un système d'alarme (200) et/ou une unité de surveillance (300), le système d'alarme (200) étant adapté pour surveiller la zone (G) ; et
un module de navigation (110) adapté pour naviguer le robot mobile (100) à l'aide d'une carte de l'environnement sur une surface de sol sur au moins une partie de la zone (G), le robot mobile (100) étant adapté pour :
stocker la zone (G) à surveiller à l'intérieur de la carte ;
envoyer une requête pour désactiver ou ignorer le système d'alarme (200) au système d'alarme (200) et/ou à l'unité de surveillance (300), quand il détecte à l'aide de la carte qu'il se dirige vers la zone (G) à surveiller ; et
envoyer une requête pour activer ou prendre de nouveau en considération le système d'alarme (200) au système d'alarme (200) et/ou à l'unité de surveillance (300), quand il détecte à l'aide de la carte qu'il se dirige hors de la zone (G) à surveiller.
